# EUROPEAN PATENT APPLICATION

(11) **EP 4 140 802 A1**
(43) Date of publication of application: **01.03.2023**
(21) Application number: 22184893.0
(22) Date of filing: 14.07.2022
(51) Int. Cl.: B60L 53/302, B60L 58/27

(54) **BATTERY CHARGING SYSTEM AND METHOD FOR ELECTRIC VEHICLE**

(30) Priority: 24.08.2021 US 202163236306 P
(71) Applicant: Taiga Motors Inc., Lasalle, QC H8N 2J8 (CA)
(72) Inventor: BERNATCHEZ, Gabriel, Montreal (CA); BRUNEAU, Samuel, Montreal (CA); GAGNON, Marc-Olivier, Montreal (CA); BOUDREAU, Jessie, Montreal (CA); GANGAVARAPU, Sivanagaraju, Montreal (CA)
(74) Representative: HGF

(57) **Abstract**

Systems and methods for charging a battery of an electric vehicle are provided. One method includes heating a battery of the electric vehicle using a battery charger of the electric vehicle. The method includes using the battery charger to generate heat without charging the battery with the battery charger, and transferring the heat generated using the battery charger to the battery to heat the battery. Once a temperature of the battery is sufficiently high to accept a charge, the battery charger may be used to charge the battery.

## Description

### CROSS-REFERENCE TO RELATED APPLICATIONS

This application claims priority from U.S. Provisional Patent Application No. 63/236,306, filed August 24, 2021.

### TECHNICAL FIELD

The disclosure relates generally to electric vehicles, and more particularly to charging batteries of electric vehicles.

### BACKGROUND

Electric vehicles such as electric snowmobiles for example can be operated in relatively cold ambient environments. Cold temperatures may reduce the performance of a battery pack of an electric vehicle during charging and/or discharging of the battery pack. Improvement is desirable.

### SUMMARY

In one aspect, the disclosure describes a method of heating a battery of an electric vehicle using a battery charger of the electric vehicle. The method comprises:
using the battery charger to generate heat without charging the battery with the battery charger; and
transferring the heat generated using the battery charger to the battery to heat the battery.

Using the battery charger to generate heat without charging the battery with the battery charger may include repeatedly actuating a switch of the battery charger to generate heat.

Using the battery charger to generate heat without charging the battery with the battery charger may includes actuating a switch of the battery charger at a frequency between 50 kHz and 1 MHz.

The method may comprise using electric power from the battery to actuate the switch of the battery charger.

Using the battery charger to generate heat without charging the battery with the battery charger may include repeatedly actuating a plurality of switches of the battery charger to generate heat.

The battery charger may be prevented from transferring electric power to the battery when the battery charger is used to generate heat without charging the battery.

The battery charger may be prevented from transferring electric power to the battery when a temperature of the battery is below a threshold temperature.

The method may comprise transferring the heat generated using the battery charger to the battery by conductive heat transfer.

The method may comprise using a thermal fluid to transfer the heat generated using the battery charger to the battery to heat the battery.

The battery may be a high-voltage battery. The method may include using electric power from a low-voltage battery of the electric vehicle to drive a pump to drive the thermal fluid.

Using the battery charger to generate heat without charging the battery with the battery charger may include supplying electric power from a source of electric power external to the electric vehicle to a resistive load other than the battery, via the battery charger.

The method may comprise transferring heat generated by the resistive load to the battery.

The method may comprise using the thermal fluid to transfer the heat from the resistive load to the battery.

The method may comprise: generating heat using an electric motor of the electric vehicle without propelling the electric vehicle using the electric motor; and transferring the heat generated using the electric motor of the electric vehicle to the battery.

The method may comprise using the thermal fluid to transfer the heat from the electric motor to the battery.

Embodiments may include combinations of the above features.

In another aspect, the disclosure describes a computer program product for operating an electric vehicle. The computer program product may comprising a non-transitory computer readable storage medium having program code embodied therewith. The program code may be readable/executable by a computer, processor or logic circuit to perform a method or action as described herein.

In another aspect, the disclosure describes a method of charging a battery of an electric vehicle. The method comprises:
generating heat with a battery charger by actuating one or more switches of the battery charger without charging the battery with the battery charger;
transferring the heat generated by the battery charger to the battery to heat the battery; and
after transferring the heat generated by the battery charger to the battery, using the battery charger to charge the battery.

The method may comprise: sensing a temperature of the battery; preventing the battery charger from charging the battery when the temperature of the battery is below a threshold temperature; and initiating charging of the battery using the battery charger when the temperature of the battery has reached the threshold temperature.

The temperature of the battery may be sensed when transferring the heat generated by the battery charger to the battery.

The method may comprise ceasing to generate heat with the battery charger by actuating the one or more switches of the battery charger without charging the battery with the battery charger when a temperature of the battery has reached a threshold temperature.

The method may comprise transferring the heat generated using the battery charger to the battery by conductive heat transfer.

The method may comprise transferring the heat generated by the battery charger to the battery using a thermal fluid.

The method may comprise, after transferring the heat generated by the battery charger to the battery, using the thermal fluid to cool the battery.

The battery may be a high-voltage battery. The method may include using electric power from a low-voltage battery to drive a pump to drive the thermal fluid.

Generating heat with the battery charger by actuating the one or more switches of the battery charger without charging the battery with the battery charger may include supplying electric power to a resistive load other than the battery, via the battery charger.

The method may comprise transferring heat generated by the resistive load to the battery.

The method may comprise: generating heat using an electric motor of the electric vehicle without propelling the electric vehicle using the electric motor; and transferring the heat generated using the electric motor to the battery.

Embodiments may include combinations of the above features.

In another aspect, the disclosure describes a battery charging system of an electric vehicle. The battery charging system comprises:
a battery charger for supplying electric power from an electric power source external to the electric vehicle to a battery of the electric vehicle during charging of the battery;
one or more data processors operatively connected to the battery charger; and
non-transitory machine-readable memory storing instructions executable by the one or more data processors and configured to cause the one or more data processors to: cause the battery charger to generate heat without charging the battery with the battery charger; and cause the heat generated using the battery charger to be transferred to the battery to heat the battery.

The battery charging system may comprise a temperature sensor operatively connected to sense a temperature of the battery. The temperature sensor may be operatively connected to the one or more data processors. The instructions may be configured to cause the one or more data processors to cause the battery charger to generate heat without charging the battery with the battery charger when a temperature of the battery is below a threshold temperature.

The instructions may be configured to cause the one or more data processors to cause the battery charger to charge the battery when the temperature of the battery is at or above the same or another threshold temperature.

The battery charger may include an actuatable switch. Using the battery charger to generate heat without charging the battery with the battery charger may include repeatedly actuating the actuatable switch.

The one or more data processors may be powered using electric power from the battery.

The battery charging system may comprise a thermal fluid providing thermal communication between the battery charger and the battery to transfer the heat generated using the battery charger to the battery.

The thermal fluid may provide thermal communication between an electric motor configured to cause propulsion of the electric vehicle, and the battery.

The instructions may be configured to cause the one or more data processors to cause electric power to be delivered to the electric motor without propelling the electric vehicle, to generate heat with the electric motor.

The battery charging system may comprise a resistive load in thermal communication with the battery. The instructions may be configured to cause the one or more data processors to cause the battery charger to supply electric power to the resistive load when the battery charger is operated to generate heat without charging the battery with the battery charger.

The battery charging system may comprise a heat exchanger facilitating heat transfer from the battery charger and from the resistive load to the thermal fluid in thermal communication with the battery.

Embodiments may include combinations of the above features.

In another aspect, the disclosure describes an electric powersport vehicle comprising a system as described herein.

In another aspect, the disclosure describes an electric snowmobile comprising a system as described herein.

In another aspect, the disclosure describes an electric powersport vehicle comprising:
a battery;
an electric motor for propelling the electric vehicle, the electric motor being operatively connected to be driven by electric power from the battery;
a battery charger for controlling electric power delivery from an electric power source external to the electric vehicle to the battery during charging of the battery of the electric vehicle; and
a controller operatively connected to the battery charger and configured to: cause the battery charger to generate heat without charging the battery with the battery charger; and cause the heat generated using the battery charger to be transferred to the battery to heat the battery.

The electric powersport vehicle may comprise a temperature sensor operatively connected to sense a temperature of the battery. The temperature sensor may be operatively connected to the controller. The controller may be configured to cause the battery charger to generate heat without charging the battery with the battery charger when a temperature of the battery is below a threshold temperature.

The controller may be configured to cause the battery charger to charge the battery when the temperature of the battery is at or above the same or another threshold temperature.

The battery charger may include an actuatable switch. Using the battery charger to generate heat without charging the battery with the battery charger may include repeatedly actuating the actuatable switch.

The controller may be powered using electric power from the battery.

The battery charger may be disposed inside of the battery.

The electric powersport vehicle may comprise a thermal fluid providing thermal communication between the battery charger and the battery to transfer the heat generated using the battery charger to the battery.

The battery may be a high-voltage battery. The electric powersport vehicle may include a low-voltage battery operatively connected to drive a pump to drive the thermal fluid.

The thermal fluid may provide thermal communication between an electric motor configured to cause propulsion of the electric vehicle, and the battery.

The controller may be configured to cause electric power to be delivered to the electric motor without propelling the electric vehicle, to generate heat with the electric motor.

The electric powersport vehicle may comprise a resistive load other than the battery in thermal communication with the battery. The controller may be configured to cause the battery charger to supply electric current to the resistive load when the battery charger is operated to generate heat without charging the battery with the battery charger.

The electric powersport vehicle may comprise a heat exchanger facilitating heat transfer from the battery charger and from the resistive load to the thermal fluid in thermal communication with the battery.

Embodiments may include combinations of the above features.

In another aspect, the disclosure describes a battery charging system of an electric vehicle. The battery charging system comprises:
a battery charger for supplying electric power from an electric power source external to the electric vehicle to a battery of the electric vehicle during charging of the battery;
an electrically resistive load other than the battery operatively connectable to the battery charger to receive electric power from the electric power source external to the electric vehicle via the battery charger; and
a heat exchanger thermally coupled to both the battery charger and the electrically resistive load to facilitate heat transfer from the battery charger and from the electrically resistive load to a thermal fluid providing thermal communication between the heat exchanger and the battery of the electric vehicle.

The heat exchanger may include a liquid cold plate heat exchanger.

The electrically resistive load other than the battery may be operatively connectable to the battery charger to receive electric power from the battery via the battery charger.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a schematic representation of an exemplary electric vehicle including a battery charging system as described herein;
FIG. 2 is a flow diagram of an exemplary method of heating a battery of an electric vehicle using a battery charger of the electric vehicle;
FIG. 3 is a flow diagram of an exemplary method of charging a battery of an electric vehicle;
FIG. 4 is a schematic representation of an exemplary battery charging system of the vehicle of FIG. 1;
FIG. 5 is a flow diagram of another exemplary method of charging a battery of an electric vehicle;
FIG. 6 is a schematic representation of an exemplary controller of the battery charging system of FIG. 4;
FIG. 7 is a schematic representation of another exemplary battery charging system of the vehicle of FIG. 1;
FIG. 8 is a schematic representation of another exemplary battery charging system of the vehicle of FIG. 1;
FIG. 9A is a schematic representation of another exemplary battery charging system of the vehicle of FIG. 1 in a battery-heating mode of operation; and
FIG. 9B is a schematic representation of another exemplary battery charging system of the vehicle of FIG. 1 in a battery-cooling mode of operation.

### DETAILED DESCRIPTION

The following disclosure relates to systems and associated methods for charging batteries of electric vehicles. In some embodiments, the systems and methods described herein may be particularly suitable for electric powersport vehicles that may be operated in colder temperatures. Examples of suitable electric powersport vehicles include snowmobiles, motorcycles, personal watercraft (PWCs), all-terrain vehicles (ATVs), and (e.g., side-by-side) utility task vehicles (UTVs). In some embodiments, the systems and methods described herein may provide heating to a battery of the electric vehicle to improve the performance of the battery during charging and/or discharging of the battery in colder temperatures. In various embodiments, the systems and methods described herein may use one or more components of the electric vehicle having other primary functions as sources of heat for the battery. This may reduce or eliminate the need for a dedicated battery heater and the associated cost, weight and complexity. For example, the systems and methods described herein may allow an electric vehicle to have a smaller battery heater than would otherwise be required, or may eliminate the need for a dedicated battery heater altogether.

In some embodiments, the systems and methods described herein may use a battery charger of the electric vehicle as a source of heat for heating the battery before charging the battery. For example, the battery charger may be operated in a heating mode of operation without charging the battery to supply heat to the battery and bring the battery to a temperature that is more suitable for accepting a charge. Once a desired temperature of the battery has been reached, the battery charger may be operated in a charging mode of operation to charge the battery. As explained below, heat may be generated by the battery charger by activating one or more switches of the battery charger to increase or maintain a temperature of the battery, or to heat another auxiliary system of the electric vehicle.

Aspects of various embodiments are described through reference to the drawings.

The terms "connected" and "coupled" may include both direct connection and coupling (where two elements contact each other) and indirect connection and coupling (where at least one additional element is located between the two elements).

The term "substantially" as used herein may be applied to modify any quantitative representation which could permissibly vary without resulting in a change in the basic function to which it is related.

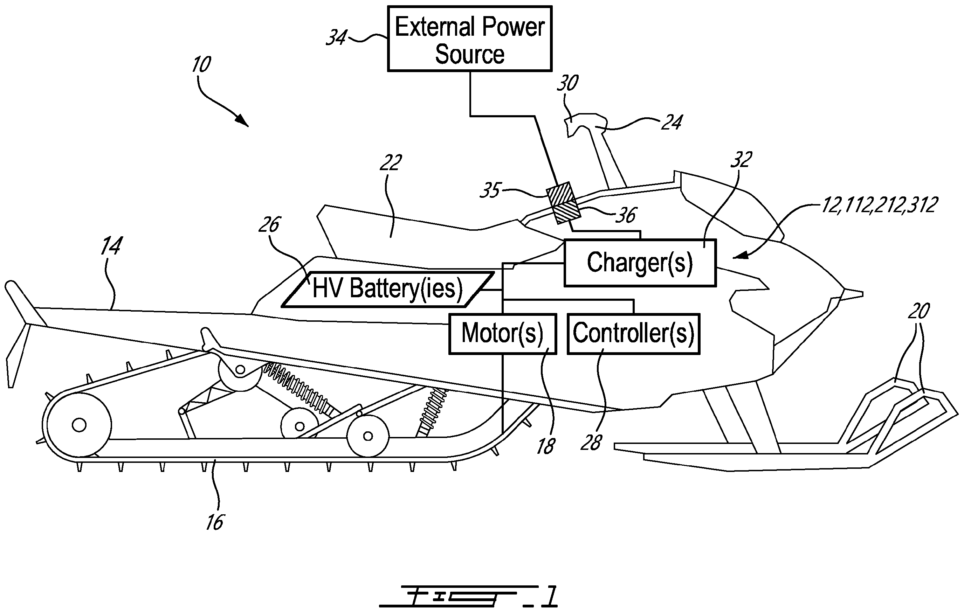

FIG. 1 is a schematic representation of an exemplary electric powersport vehicle 10 (referred hereinafter as "vehicle 10") including battery charging system 12 (referred hereinafter as "system 12") or any of battery charging systems 112, 212, 312 (respectively referred herein as "system 112", "system 212" and "system 312") as described herein. As illustrated in FIG. 1, vehicle 10 may be a snowmobile but it is understood that the systems and methods described herein may also be used on other types of electric vehicles such as electric UTVs, such as side-by-side vehicles, electric ATVs, electric PWCs, electric motorcycles, and other electric powersport vehicles. The systems and methods described herein may also be used on electric (e.g., outboard) motors for boats. In some embodiments, vehicle 10 may be an electric snowmobile including elements of the snow vehicle described in International Patent Application no. WO 2019/049109 A1 (Title: Battery arrangement for electric snow vehicles), and U.S. Patent Application no. 63/135,497 (Title: Electric vehicle with battery pack as structural element).

Vehicle 10 may include a frame (also known as a chassis) which may include tunnel 14, track 16 having the form of an endless belt for engaging the ground and disposed under tunnel 14, one or more electric motors 18 (referred hereinafter in as motor 18) mounted to the frame and configured to drive track 16, left and right skis 20 disposed in a front portion of vehicle 10, straddle seat 22 disposed above tunnel 14 for accommodating an operator of vehicle 10 and optionally one or more passengers (not shown). Skis 20 may be movably attached to the frame to permit steering of vehicle 10 via a steering assembly including a steering column interconnecting handlebar 24 with skis 20.

Motor 18 may be drivingly coupled to track 16 via a drive shaft to cause propulsion of vehicle 10. Motor 18 may be in torque-transmitting engagement with the drive shaft via a belt/pulley drive. However, motor 18 may be in torque-transmitting engagement with the drive shaft via other arrangements such as a chain/sprocket drive, or shaft/gear drive for example. The drive shaft may be drivingly coupled to track 16 via one or more toothed wheels or other means so as to transfer motive power from motor 18 to track 16.

Vehicle 10 may also include one or more high-voltage (HV) batteries 26 (referred hereinafter in the singular as "HV battery 26") for providing electric power to motor 18 and driving motor 18. HV battery 26 may be disposed under seat 22 and may also be referred to as a "battery pack". The operation of motor 18 may be controlled by one or more controllers 28 (referred hereinafter in the singular) based on an actuation of accelerator 30, also referred to as "throttle", by the operator. In some embodiments, HV battery 26 may be a rechargeable lithium ion or other type of battery. In some embodiments, HV battery 26 may be configured to output electric power at a voltage of about 300 volts.

In various embodiments, motor 18 may be a permanent magnet synchronous motor or a brushless direct current motor for example. Motor 18 may be of a same type as, or may include elements of, the motors described in U.S. Provisional Patent Applications no. US 63/135,466 (Title: Drive unit for electric vehicle) and no. US 63/135,474 (Title: Drive unit with fluid pathways for electric vehicle).

Vehicle 10 may include battery charger 32 (referred hereinafter as "charger 32") suitable for controlling electric power delivery from an external power source 34 to HV battery 26 during charging of HV battery 26. Charger 32 may include an assembly containing power components such as power semiconductor devices interconnected to perform a power conversion (e.g., rectification, voltage change) function of electric power from external power source 34 to electric power suitable for charging of HV battery 26. For example, charger 32 may include a rectifier suitable for converting alternating current (AC) from external power source 34 to direct current (DC) suitable for charging HV battery 26. External power source 34 may be a suitable charging station providing standard electric power from a power utility grid for example. In various embodiments, external power source 34 may supply AC electric power at 120 volts, AC electric power at 240 volts, or AC electric power at 208 volts, or DC electric power at 400 to 800 volts for example. Electric communication between external power source 34 and charger 32 may be achieved by way of connector 35 associated with external power source 34, and a cooperating charging port 36 of vehicle 10.

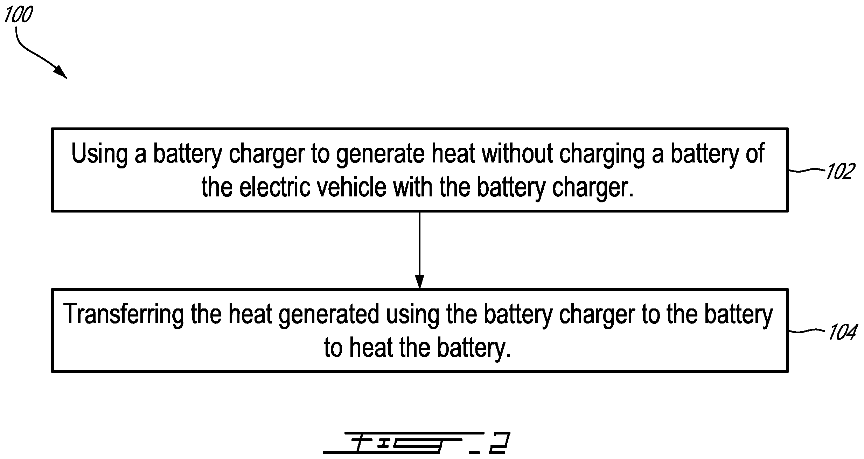

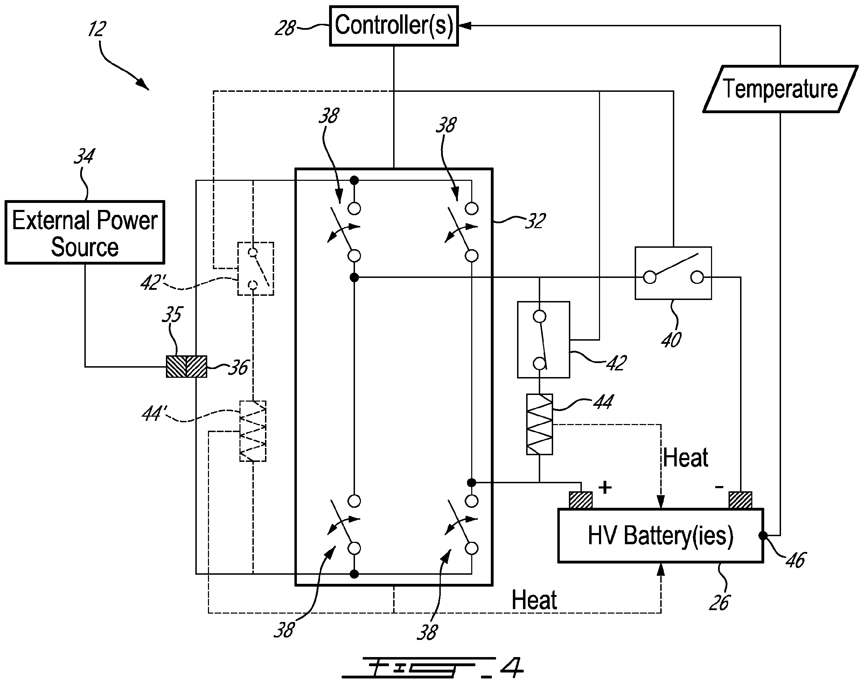

FIG. 2 shows a flow diagram of an exemplary method 100 of heating HV battery 26 of vehicle 10 or of another electric (e.g., powersport) vehicle using charger 32 of vehicle 10. Aspects of method 100 may be combined with other actions or aspects of other methods described herein. In some embodiments, method 100 may be carried out using systems 12, 112, 212, 312 and therefore functions and other aspects of vehicle 10 and of systems 12, 112, 212, 312 may be incorporated into method 100. Further aspects of method 100 are described below in reference to FIGS. 4-8B. In various embodiments, method 100 may include:
using charger 32 to generate heat without charging HV battery 26 with charger 32 (block 102); and
transferring the heat generated using charger 32 to HV battery 26 to heat battery 26 (block 104).

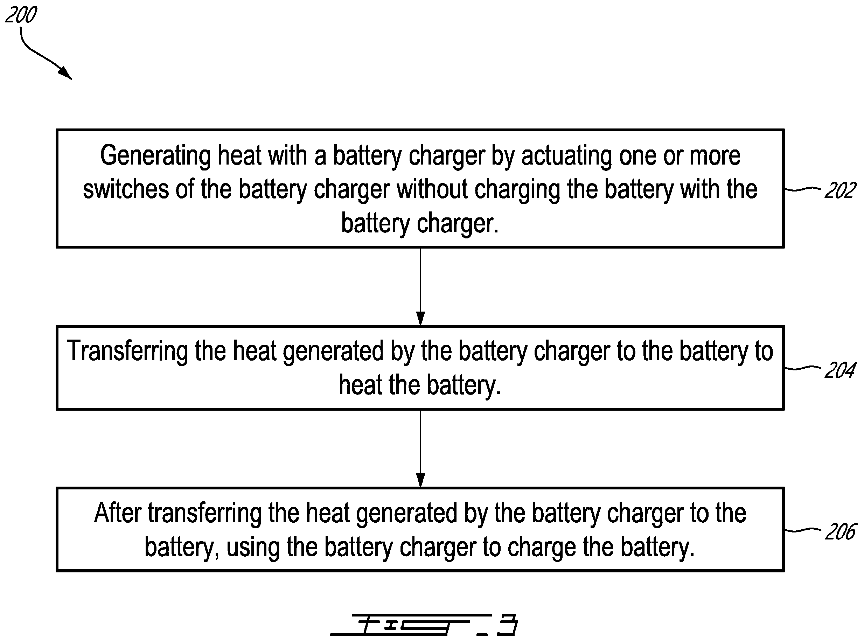

FIG. 3 is a flow diagram of an exemplary method 200 of charging HV battery 26 of vehicle 10 or of another electric (e.g., powersport) vehicle. Aspects of method 200 may be combined with other actions or aspects of other methods described herein. In some embodiments, method 200 may be carried out using systems 12, 112, 212, 312 and therefore functions and other aspects of vehicle 10 and of systems 12, 112, 212, 312 may be incorporated into method 200. Further aspects of method 200 are described below in reference to FIGS. 4-8B. In various embodiments, method 200 may include:
generating heat with charger 32 by actuating one or more charger switches 38 (shown in FIG. 4) of charger 32 without charging HV battery 26 with charger 32 (block 202);
transferring the heat generated by charger 32 to HV battery 26 to heat HV battery 26 (block 204); and
after transferring the heat generated by charger 32 to HV battery 26, using charger 32 to charge HV battery 26.

FIG. 4 is an exemplary schematic representation of system 12 of vehicle 10. External power source 34 may be electrically connectable and electrically disconnectable from charger 32 via connector 35 and cooperating charging port 36. Charger 32 may include an active rectifier, also known as a synchronous rectifier, where rectification of the electric current delivered to HV battery 26 from external power source 34 during charging of HV battery 26 may be rectified using actively controlled actuatable charger switches 38. In various embodiments, charger switches 38 may include power metal-oxide-semiconductor field-effect transistors (MOSFETs) and/or power bipolar junction transistors (BJTs) for example. The actuation of charger switches 38 may be controlled by controller 28 according to the desired mode of operation of charger 32.

In a charging mode of operation of charger 32, charger switches 38 may be controlled to achieve current rectification based on (e.g., the AC frequency) of the electric power received from external power source 34. On the other hand, in a heating mode of operation, one, some or all of charger switches 38 may be repeatedly actuated at a desired switching frequency without charging HV battery 26 so that the actuation of charger switch(es) 38 may generate heat that may then be transferred to HV battery 26 via suitable conductive and/or convective heat transfer path(s) for example. In other words, charger 32 may be operated in a wasteful and/or inefficient way to generate waste heat. During the heating mode of operation, one or more of charger switches 38 may each be repeatedly actuated at a frequency that is higher than a frequency typically used during the charging mode of operation. In some embodiments, during the heating mode of operation, one or more of charger switches 38 may each be repeatedly actuated at a frequency that is between 50 kHz and 1 MHz. In some embodiments, the one or more of charger switches 38 may each be repeatedly actuated at a frequency that is greater than 1 MHz during the heating mode of operation. In some embodiments, the one or more of charger switches 38 may each be repeatedly actuated at a frequency that is between 1 MHz and a rated maximum switching frequency of the one or more of charger switches 38 during the heating mode of operation.

Heat may be transferred from charger 32 to HV battery 26 before charging of HV battery 26, during charging of HV battery 26, and/or during discharging of HV battery 26 (e.g., during propulsion of vehicle 10). For example, heat generated by charger 32 during charging of HV battery 26 using charger 32 may be transferred to HV battery 26. In other words, heat generated by charger 32 may be transferred to HV battery 26 during the charging mode of operation of charger 32 and/or during the heating mode of operation of charger 32.

The heating mode of operation of charger 32 may be carried out with external power source 34 connected to charging port 36 of vehicle 10, or with an internal power source such as HV battery 26 electrically connected to charger 32 if charger 32 is bi-directional for example. Charger switch(es) 38 may be repeatedly actuated at the desired frequency under the control of controller 28 to intermittently allow current from external power source 34 or from HV battery 26 to flow through charger switch(es) 38 and be directed to one or more resistive loads such as heater(s) 44 and/or 44', and/or one or more windings of motor 18, that may generate heat by the passing of an electric current therethrough. For example, the electric current flowing through charger 32 from external power source 34 may be directed to heater 44 via heater switch 42. Heater 44 may be thermally coupled to HV battery 26 as shown in FIG. 4, or may be thermally coupled to one or more other components of vehicle 10 to be heated. Heater 44 may be integral to HV battery 26 or separate from HV battery 26. Heat generated by heater 44 may be transferred to HV battery 26 via suitable conductive and/or convective heat transfer path(s) for example.

In situations where external power source 34 is electrically connected to charging port 36 during the heating mode of operation of charger 32, battery switch 40 may be commanded by controller 28 to adopt the open configuration shown in FIG. 4 in order to electrically disconnect charger 32 from HV battery 26. Accordingly, electric power from external power source 34 may be prevented from being delivered to HV battery 26 when charger switches 38 are repeatedly actuated at the desired frequency to generate heat without delivering electric power from external power source 34 to HV battery 26 (i.e., without charging HV battery 26). In this situation, heater switch 42 may be commanded by controller 28 to adopt the closed configuration shown in FIG. 4 to direct the current from external power source 34 to heater 44 or other resistive load.

In situations where charger 32 is bi-directional and electric current from external power source 34 or from HV battery 26 may be directed through charger 32 during the heating mode of operation, the same heater 44 may be electrically connectable to the applicable (i.e., input or output) side of charger 32 via suitable switch(es) so that such current may be directed to heater 44 downstream of charger 32 during heating of HV battery 26. Alternatively or in addition, different heaters 44, 44' may be used in different scenarios depending on whether the electric current comes from external power source 34 or from HV battery 26. For example, another heater 44' may be connectable via other heater switch 42' to the side of charger 32 opposite heater 44 so that the current from HV battery 26 may be directed to such other heater 44' during heating of HV battery 26. Such other heater 44' may be of the same or different type as heater 44. Other heater 44' may include one or more electrically resistive loads that may be thermally coupled to HV battery 26 via suitable conductive and/or convective heat transfer path(s) for example.

Charger 32, battery switch 40 and heater switches 42, 42' may be operatively connected to controller 28 so that controller 28 may command charger switches 38, battery switch 40 and/or heater switches 42, 42' to adopt desired configurations associated with different modes of operation of system 12. The opening of battery switch 40 may prevent the delivery of battery-charging current from external power source 34 to HV battery 26 by charger 32 when charger 32 is operated in the heating mode of operation.

System 12 may include temperature sensor 46 operatively connected to sense a temperature associated with HV battery 26, and operatively connected to provide a corresponding temperature reading to controller 28. In various embodiments, temperature sensor 46 may include a thermocouple, thermistor, resistance temperature detector, and/or other suitable type of temperature sensor(s). The temperature of HV battery 26 may then be used by controller 28 to control the operation of system 12 accordingly. For example, upon receiving a command to charge HV battery 26 either automatically when connector 35 is connected to charging port 36, or manually by operator input via a suitable operator interface (e.g., push button, switch), controller 28 may initiate the heating mode of operation of charger 32 without charging HV battery 26 with charger 32 if the temperature of HV battery 26 is below a prescribed threshold temperature selected to provide the desired charging performance. Following a period of battery heating using charger 32, controller 28 may then initiate charging of HV battery 26 using charger 32 when the temperature of HV battery 26 has reached or has exceeded the prescribed threshold temperature. The temperature of HV battery 26 may be sensed when the heat generated by charger 32 is transferred to HV battery 26 and/or at other times.

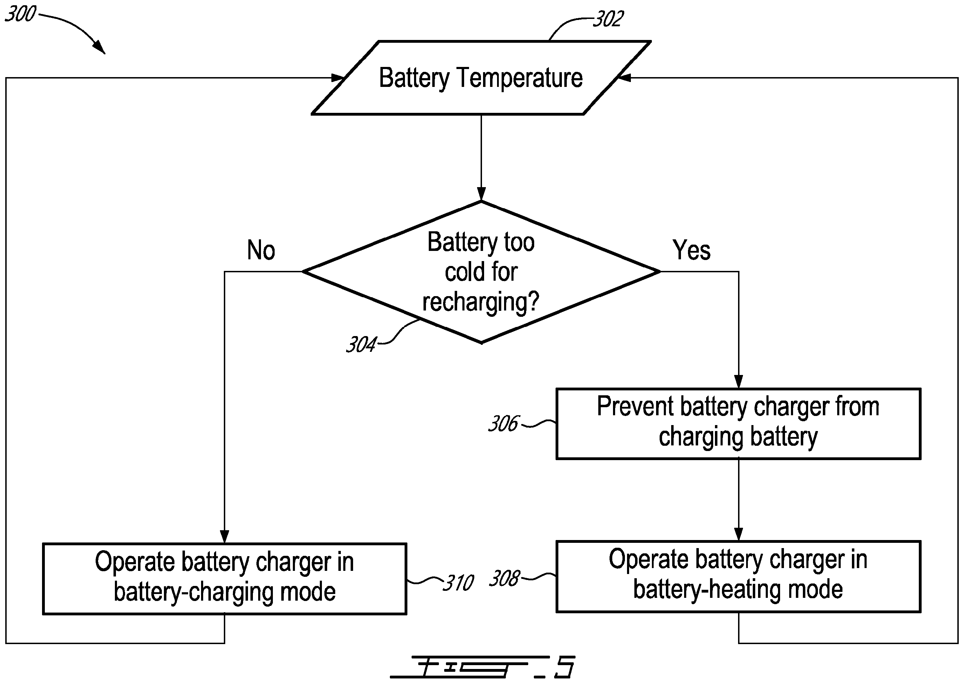

FIG. 5 is a flow diagram of an exemplary method 300 of charging HV battery 26 of vehicle 10 or of another electric (e.g., powersport) vehicle. Aspects of method 300 may be combined with other actions or aspects of other methods described herein. In some embodiments, method 300 may be carried out using systems 12, 112, 212, 312 and therefore functions and other aspects of vehicle 10 and of systems 12, 112, 212, 312 may be incorporated into method 300.

The mode of operation of charger 32 may be selected based on the ambient temperature and/or based on a temperature (see block 302) associated with HV battery 26 acquired via temperature sensor 46. For example, if it is determined at block 304 that HV battery 26 is too cold for recharging, charger 32 may me prevented from charging HV battery 26 at block 306, and then charger 32 may be operated in the heating mode of operation at block 308 in order to raise the temperature of HV battery 26 in preparation for charging of HV battery 26 in order to permit HV battery 26 to accept a charge and/or improve the charging performance of HV battery 26.

The criteria at block 304 may be selected according to a level of charging performance desired. For example, the mode of operation of charger 32 may be selected by one or more threshold temperatures associated with HV battery 26. For example a first temperature threshold may represent a temperature (e.g., 0 °C or 5 °C) at or above which the ability of HV battery 26 to accept a charge is acceptable. Therefore, when HV battery 26 is to be recharged at battery temperatures below the first threshold temperature, heating of HV battery 26 using charger 32 (see block 308) may be conducted prior to initiating charging of HV battery 26 at block 310. The first temperature threshold may be selected based on the type of HV battery 26 used as well as a desired minimum charging performance of HV battery 26.

In some embodiments, method 300 may be performed using controller 28 in a closed loop manner where the battery temperature at block 302 is continuously or intermittently acquired during the battery-heating and/or during the battery-charging modes of operation of charger 32. Accordingly, controller 28 may evaluate the ability of HV battery 26 to be recharged at block 304 and decide whether the heating mode of operation or the charging mode of operation of charger 32 should be commanded. For example, as HV battery 26 is being heated by charger 32 at block 308, controller 28 may determine that the temperature of HV battery 26 has become suitable for charging and may consequently cause the heating mode of operation of charger 32 to cease, and the charging mode of operation of charger 32 to begin at block 310. On the other hand, as HV battery 26 is being recharged by charger 32 at block 310, controller 28 may determine that the temperature of HV battery 26 has become unsuitable for charging and may consequently cause the charging mode of operation of charger 32 to cease and the heating mode of operation of charger 32 to begin (or resume) at block 308.

In other situations, charger 32 may be operated in the heating mode of operation in order to raise the temperature of HV battery 26 in preparation for use of vehicle 10 in order to improve the performance of HV battery 26 during the operation (e.g., propulsion) of vehicle 10 for example. Prior to operating vehicle 10, a second temperature threshold may be used by controller 28 to determine the ability of HV battery 26 to drive motor 18 or other electric load(s) is acceptable. For example, when vehicle 10 is activated and HV battery 26 is expected to be discharged at battery temperatures below the second threshold temperature, heating of HV battery 26 using charger 32 may be conducted prior to initiating significant discharge of HV battery 26. The second temperature threshold may be selected based on the type of HV battery 26 used as well as a desired minimum performance of HV battery 26 during discharge of HV battery 26.

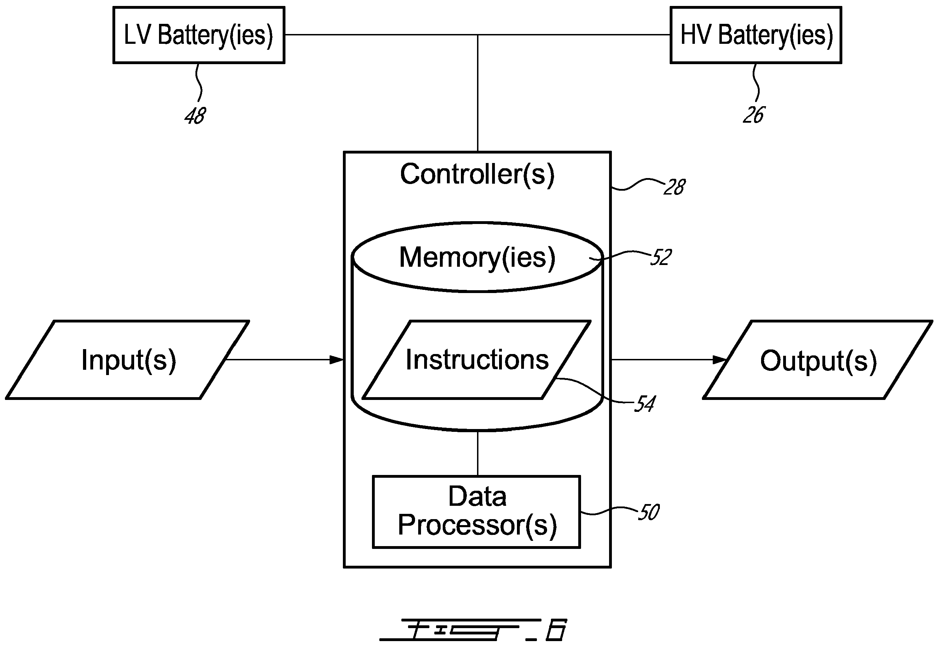

FIG. 6 is a schematic representation of an exemplary controller 28 of system 12. In some embodiments, controller 28 may be powered by HV battery 26 so that electric power from HV battery 26 may be used to actuate charger switches 38 of charger 32 to generate heat, which is then used to heat HV battery 26. In some embodiments, controller 28 may be powered by one or more low-voltage (LV) batteries 48 (referred hereinafter in the singular) of vehicle 10. LV battery 48 may supply electric power to controller 28 and optionally other low-voltage devices of vehicle 10. In some embodiments, LV battery 48 may include a lead-acid battery. In some embodiments, LV battery 48 may be configured to output electric power at a voltage of about 12 volts. HV battery 26 and/or LV battery 48 may be electrically connectable to controller 28 either directly or via a suitable DC/DC converter.

Controller 28 may include one or more data processors 50 (referred hereinafter as "processor 50") and non-transitory machine-readable memory 52. Controller 28 may be configured to regulate the operation of charger 32 and optionally also control other aspects of operation of vehicle 10. Controller 28 may receive input(s), perform one or more procedures or steps defined by instructions 54 stored in memory 52 and executable by processor 50 to generate output(s). Controller 28 may include multiple controllers including a vehicle controller, a battery controller (e.g., battery management system), and a motor controller for example, and may carry out additional functions than those described herein.

Processor 50 may include any suitable device(s) configured to cause a series of steps to be performed by controller 28 so as to implement a computer-implemented process such that instructions 54, when executed by controller 28 or other programmable apparatus, may cause the functions/acts specified in the methods described herein to be executed. Processor 50 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 52 may include any suitable machine-readable storage medium. Memory 52 may include non-transitory computer readable storage medium such as, for example, but not limited to, an electronic, magnetic, optical, electromagnetic, infrared, or semiconductor system, apparatus, or device, or any suitable combination of the foregoing. Memory 52 may include a suitable combination of any type of machine-readable memory that is located either internally or externally to controller 28. Memory 52 may include any storage means (e.g. devices) suitable for retrievably storing machine-readable instructions 54 executable by processor 50.

Various aspects of the present disclosure may be embodied as systems, devices, methods and/or computer program products. Accordingly, aspects of the present disclosure may take the form of an entirely hardware embodiment, an entirely software embodiment or an embodiment combining software and hardware aspects. Furthermore, aspects of the present disclosure may take the form of a computer program product embodied in one or more non-transitory computer readable medium(ia) (e.g., memory 52) having computer readable program code (e.g., instructions 54) embodied thereon. Computer program code for carrying out operations for aspects of the present disclosure in accordance with instructions 54 may be written in any combination of one or more programming languages. Such program code may be executed entirely or in part by controller 28 or other data processing device(s). It is understood that, based on the present disclosure, one skilled in the relevant arts could readily write computer program code for implementing the methods described and illustrated herein.

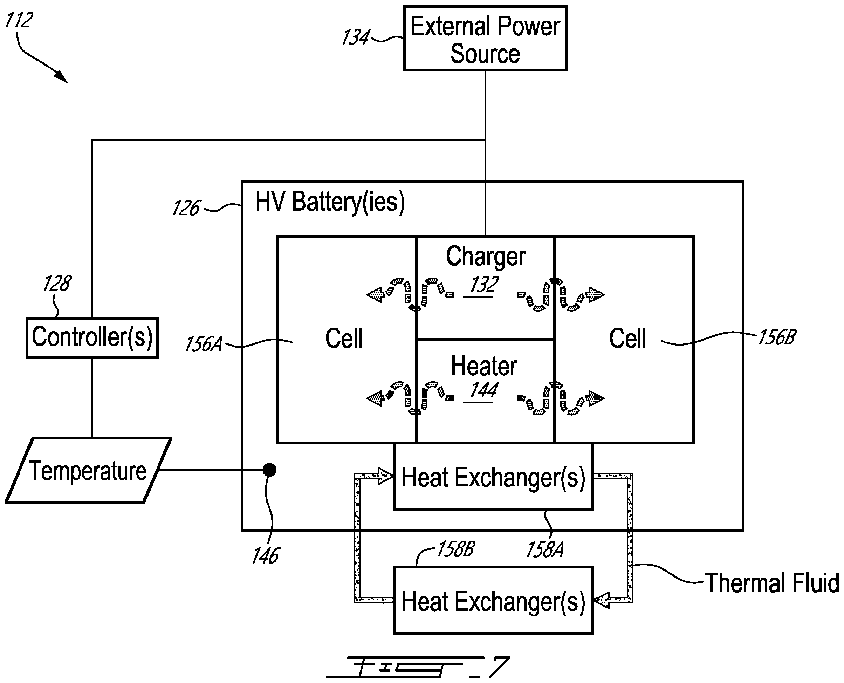

FIG. 7 is a schematic representation of system 112 for charging HV battery 126. System 112 may have elements in common with system 12 described above. Like elements have been identified using reference numerals incremented by 100. System 112 may include elements of other systems disclosed herein. System 112 may be part of a thermal management system of vehicle 10 for heating and/or cooling one or more components of vehicle 10.

System 112 may include controller 128, charger 132 and optional heater 144. In some embodiments, charger 132 and optionally heater 144 may be incorporated with HV battery 126. For example, charger 132 may be part of a battery pack including HV battery 126. In other words, charger 132 and optional heater 144 may be part of a unitary battery pack (e.g., replaceable unit) of vehicle 10. The integration of charger 132 and heater 144 with HV battery 126 may facilitate a relatively short heat transfer path between charger 132 and one or more cells 156A, 156B of HV battery 126, and/or between heater 144 and cells 156A, 156B. In some embodiments, such heat transfer path(s) may be partially or substantially entirely conductive. In some embodiments, charger 132 and/or heater 144 may be disposed between neighboring cells 156A, 156B of HV battery 126 and may be in thermal communication therewith. In some embodiments, charger 132 and/or heater 144 may be disposed between neighboring modules of HV battery 126 and may be in thermal communication therewith

In some embodiments, one or more heat exchangers 158A, 158B may be provided to provide further heating and/or cooling of HV battery 126 using a thermal fluid during some modes of operation of vehicle 10 depending on the temperature of HV battery 126. Heating or cooling of HV battery 126 may be used to keep the temperature of HV battery 126 at a desired temperature or within a desired range of temperatures to obtain a suitable performance of HV battery 126. The thermal fluid may be a suitable heat transfer fluid (e.g., liquid) capable of carrying heat and may be selected based on the expected operating temperature of vehicle 10. In various embodiments, the thermal fluid may be oil, water or a water-glycol solution for example.

The thermal fluid may be used in a thermal loop including heat exchangers 158A, 158B and suitable conduit(s) (e.g., pipes). First heat exchanger 158A may be configured to facilitate heat transfer between the thermal fluid and HV battery 126. First heat exchanger 158A may include a panel configured to facilitate heat transfer between the thermal fluid and one or more cells 156A, 156B of HV battery 126. First heat exchanger 158A may include one or more panels as disclosed in U.S. Patent Publication No. US 2021/0135307 A1 (Title: Battery Cooling Panel for Electric Vehicle).

Second heat exchanger 158B may be of any suitable type to facilitate heat transfer between the thermal fluid and a substance other than HV battery 126. In some embodiments, second heat exchanger 158B may facilitate heat transfer from a source of heat to the thermal fluid to cause heating of HV battery 126. In some embodiments, second heat exchanger 158B may facilitate heat transfer from the thermal fluid to a suitable heat sink (e.g., ambient air, water or snow) to cause cooling of HV battery 126.

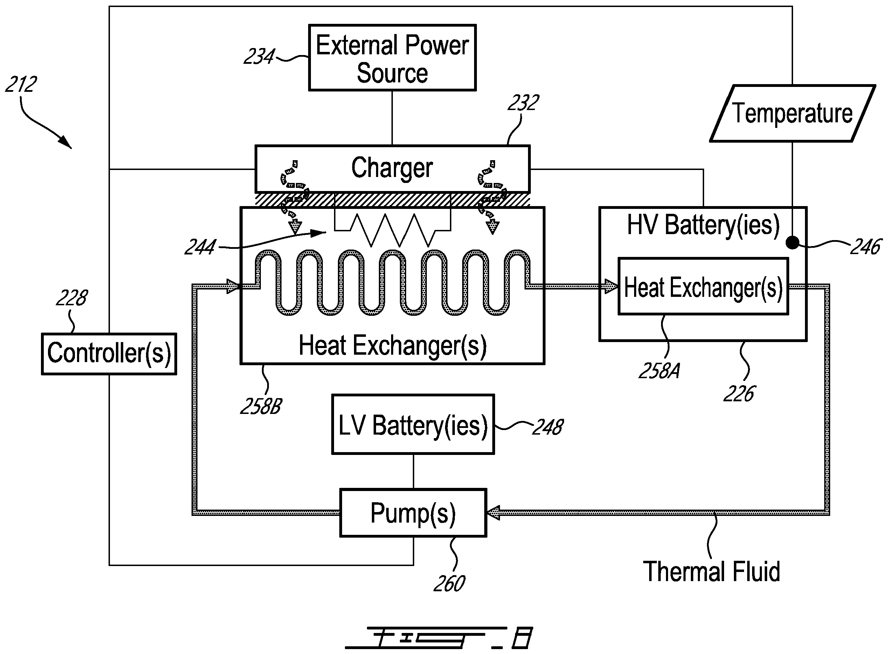

FIG. 8 is a schematic representation of system 212 for charging HV battery 126. System 212 may have elements in common with system 12 described above. Like elements have been identified using reference numerals incremented by 200. System 212 may include elements of other systems disclosed herein. System 212 may be part of a thermal management system of vehicle 10 for heating and/or cooling one or more components of vehicle 10.

System 212 may include controller 228, charger 232 and optional heater 244. In some embodiments, charger 232 and optional heater 244 may be separate from HV battery 126 and may be in thermal communication with HV battery 226 via the thermal fluid. In some embodiments, the heat transfer path(s) between charger 232 and HV battery 226 and optionally between heater 244 and HV battery 226 may be partially or substantially entirely convective where the heat is transferred from one location to another due to the movement of the thermal fluid.

The thermal fluid may circulate in a thermal loop including first heat exchanger 258A, pump 260, and second heat exchanger 258B. First heat exchanger 258A may be of the same type as first heat exchanger 158A described above, or may be of any suitable type to facilitate heat transfer between the thermal fluid and HV battery 226.

Second heat exchanger 258B may be of any suitable type to facilitate heat transfer between the thermal fluid and charger 232. In some embodiments, a conductive heat transfer path may be defined between second heat exchanger 258B and charger 232. In some embodiments, second heat exchanger 258B may be a (e.g., aluminum alloy or coper alloy) liquid cold plate including one or more channels for accommodating the flow of thermal fluid therethrough. In some embodiments, second heat exchanger 258B may be in conductive thermal communication with charger 232 via a suitable thermal adhesive or thermal paste to promote heat transfer therebetween. In other words, second heat exchanger 258B may function as heat sink for charger 232. During operation of system 212, heat that is captured by the thermal fluid at second heat exchanger 258B may be carried to first heat exchanger 258A and released into HV battery 226.

In some embodiments, optional heater 244 may be integrated into second heat exchanger 258B or be otherwise in thermal communication with second heat exchanger 258B. For example, heater 244 may be defined on a printed circuit board in conductive thermal communication with second heat exchanger 258B via a suitable thermal adhesive or thermal paste. In some embodiments, the same second heat exchanger 258B may be thermally coupled to both charger 232 and heater 244 and may therefore facilitate heat transfer from both charger232 and heater 244 to the thermal fluid. In some embodiments, heater 244 may be immersed into the thermal fluid.

In various embodiments, electric power from HV battery 226 may be used to drive pump 260, or electric power from LV battery 248 may be used to drive pump 260 as illustrated in FIG. 8.

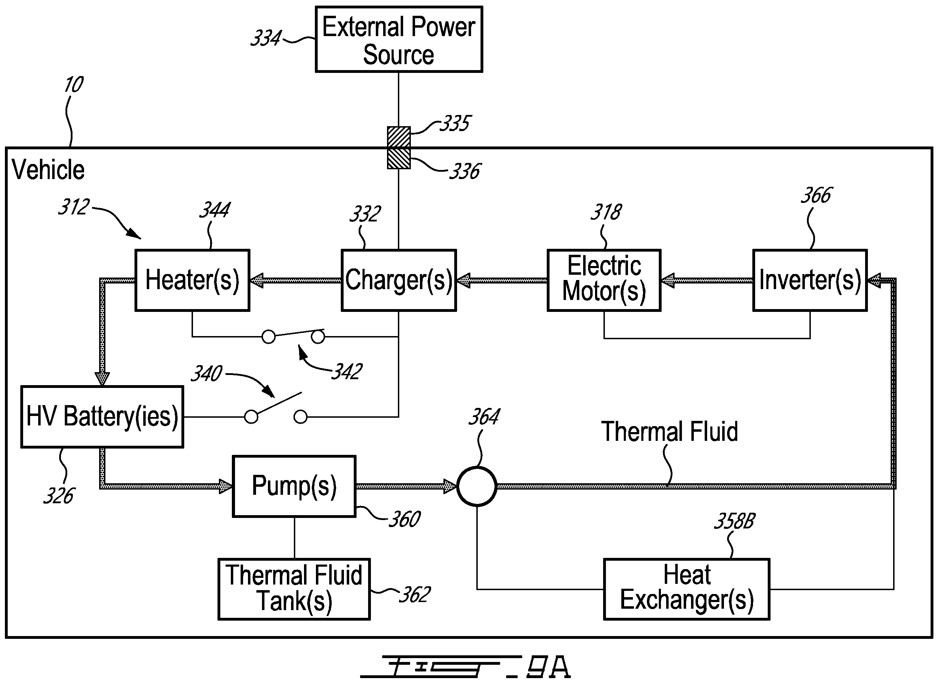

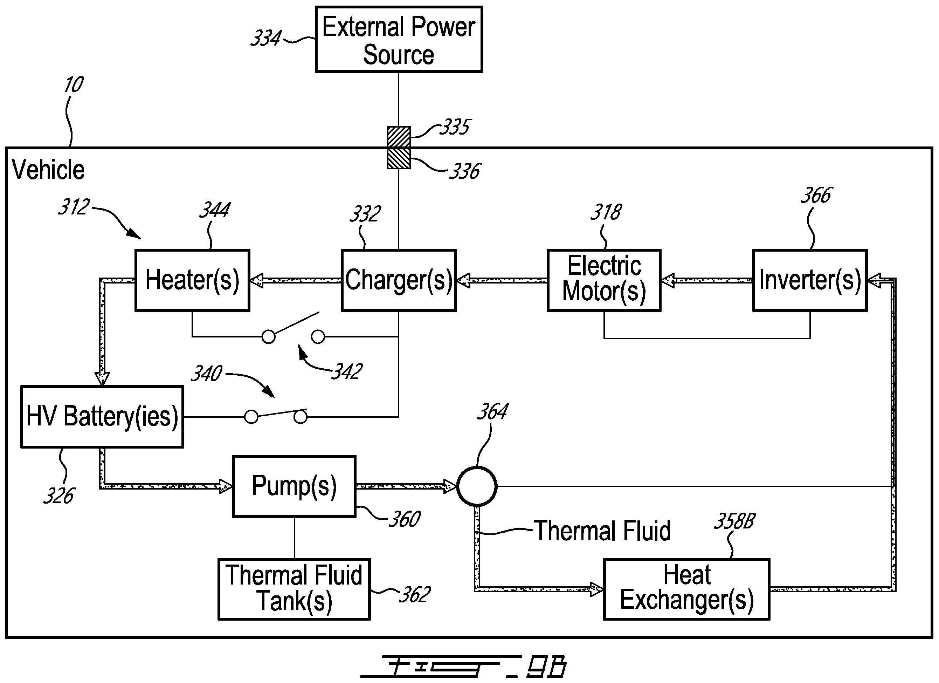

FIGS. 9A and 9B are schematic representations of system 312 for charging HV battery 126. System 312 may have elements in common with system 12 described above. Like elements have been identified using reference numerals incremented by 300. System 312 may include elements of other systems disclosed herein. FIG. 9A illustrates the operation of system 312 during heating of HV battery 326 and FIG. 9B illustrates the operation of system 312 during cooling of HV battery 326. System 312 may be part of a thermal management system of vehicle 10 for heating and/or cooling one or more components of vehicle 10.

In reference to FIG. 9A, external power source 334 may be electrically connected to vehicle 10 via connector 335 and cooperating charging port 336 of vehicle 10. Charger 332 may be operated in the heating operating mode where electric power passing through charger 332 is delivered to optional heater 344 via heater switch 342 shown in the closed configuration in FIG. 9A. In the heating mode of operation of charger 332, battery switch 340 may be in the open configuration to prevent charger 332 from delivering electric power to HV battery 326. Pump 360 may be fluidly connected to thermal fluid tank 362 supplying thermal fluid to the thermal loop or receiving thermal fluid from the thermal loop.

Three-way valve 364 may be operatively connected to a controller and controlled by such controller to selectively direct the thermal fluid to heat exchanger 358B depending on whether heating or cooling of HV battery 326 is desired. Heat exchanger 358B may facilitate heat transfer from the thermal fluid to a suitable heat sink (e.g., ambient air, water or snow) when cooling of HV battery 326 and/or of other components of vehicle 10 is desired. In the configuration of FIG. 9A, three-way valve 364 may be configured to cause the thermal fluid to bypass heat exchanger 358B.

In some embodiments, other components of vehicle 10 such as motor 318 and/or inverter 366 may be part of the thermal loop. Accordingly, heat generated by such components may also be transferred to HV battery 326 using the thermal fluid to heat HV battery 326. One or more suitable heat exchangers may be used to facilitate heat transfer between motor 318 and the thermal fluid and optionally also between inverter 366 and the thermal fluid. In various embodiments, motor 318 and charger 332 may be arranged in series or in parallel in the thermal fluid circuit of FIGS. 9A, 9B. In some embodiments, additional valves or other fluid control devices may be incorporated in the thermal fluid circuit to direct the flow of thermal fluid into both or only one of charger 332 and motor 318.

During the heating of HV battery 326, one or more windings of motor 18 may be used as a resistive load and as a heater. For example, inverter 366 may include a plurality of switches (e.g., insulated-gate bipolar transistor (IGBT)) used to control the delivery of electric power to motor 318 when motor 318 is used to propel vehicle 10. However, during heating of HV battery 326 in preparation for charging HV battery 326 for example, inverter 366 may be used to deliver electric power from HV battery 326 or from external power source 334 to one or more windings of motor 318 without causing rotation of a rotor of motor 318 and hence without propelling vehicle 10. The heat generated by the windings of motor 318 may be transferred to the thermal fluid and carried toward HV battery 326. In some embodiments, inverter 366 may be operated in a similar manner as the heating mode of operation of charger 332 to generate waste heat that can then be transferred to HV battery 326 via the thermal fluid. In other words, motor 318 and/or inverter 366 may be operated in a wasteful, inefficient way to generate waste heat to increase the temperature of HV battery 326.

In reference to FIG. 9B, external power source 334 may be electrically connected to vehicle 10 via connector 335 and cooperating charging port 336. Charger 332 may be operated in the charging operating mode where electric power passing through charger 332 is delivered to HV battery 326 via battery switch 340 shown in the closed configuration in FIG. 9B. In the cooling mode of operation of system 312, heater switch 342 may be in the open configuration to prevent charger 332 from delivering electric power to heater 344.

In the configuration of FIG. 9B, three-way valve 364 may be configured to cause the thermal fluid to pass through heat exchanger 358B to promote heat rejection from the thermal fluid. Heat exchanger 358B may facilitate heat transfer from the thermal fluid to a suitable heat sink (e.g., ambient air, water or snow) when cooling of HV battery 326 and/or of other components of vehicle 10 is desired.

The embodiments described in this document provide non-limiting examples of possible implementations of the present technology. Upon review of the present disclosure, a person of ordinary skill in the art will recognize that changes may be made to the embodiments described herein without departing from the scope of the present technology. Further modifications could be implemented by a person of ordinary skill in the art in view of the present disclosure, which modifications would be within the scope of the present technology.

## Claims

1. A method of heating a battery of an electric vehicle using a battery charger of the electric vehicle, the method comprising:
using the battery charger to generate heat without charging the battery with the battery charger; and
transferring the heat generated using the battery charger to the battery to heat the battery.

2. The method as defined in claim 1, wherein using the battery charger to generate heat without charging the battery with the battery charger includes repeatedly actuating a switch of the battery charger to generate heat.

3. The method as defined in claim 1, wherein using the battery charger to generate heat without charging the battery with the battery charger includes actuating a switch of the battery charger at a frequency between 50 kHz and 1 MHz.

4. The method as defined in claim 2 or claim 3, comprising using electric power from the battery to actuate the switch of the battery charger.

5. The method as defined in claim 1, wherein using the battery charger to generate heat without charging the battery with the battery charger includes repeatedly actuating a plurality of switches of the battery charger to generate heat.

6. The method as defined in any one of claims 1 to 5, wherein the battery charger is prevented from transferring electric power to the battery when the battery charger is used to generate heat without charging the battery.

7. The method as defined in any one of claims 1 to 6, wherein the battery charger is prevented from transferring electric power to the battery when a temperature of the battery is below a threshold temperature.

8. The method as defined in any one of claims 1 to 7, comprising transferring the heat generated using the battery charger to the battery by conductive heat transfer.

9. The method as defined in any one of claims 1 to 7, comprising using a thermal fluid to transfer the heat generated using the battery charger to the battery to heat the battery.

10. The method as defined in claim 9, wherein:
the battery is a high-voltage battery; and
the method includes using electric power from a low-voltage battery of the electric vehicle to drive a pump to circulate the thermal fluid.

11. The method as defined in any one of claims 1 to 10, wherein using the battery charger to generate heat without charging the battery with the battery charger includes supplying electric power from a source of electric power external to the electric vehicle to a resistive load other than the battery, via the battery charger.

12. The method as defined in claim 11, comprising transferring heat generated by the resistive load to the battery.

13. A battery charging system of an electric vehicle, the battery charging system comprising:
a battery charger for supplying electric power from an electric power source external to the electric vehicle to a battery of the electric vehicle during charging of the battery;
an electrically resistive load other than the battery operatively connectable to the battery charger to receive electric power from the electric power source external to the electric vehicle via the battery charger; and
a heat exchanger thermally coupled to both the battery charger and the electrically resistive load to facilitate heat transfer from the battery charger and from the electrically resistive load to a thermal fluid providing thermal communication between the heat exchanger and the battery of the electric vehicle.

14. The battery charging system as defined in claim 13, wherein the heat exchanger includes a liquid cold plate heat exchanger.

15. The battery charging system as defined in claim 13, wherein the electrically resistive load other than the battery is operatively connectable to the battery charger to receive electric power from the battery via the battery charger.
